# EUROPEAN PATENT APPLICATION

(11) **EP 3 928 636 A1**
(43) Date of publication of application: **29.12.2021**
(21) Application number: 20717334.5
(22) Date of filing: 18.02.2020
(51) Int. Cl.: A23L 33/105, A23L 33/16, A47G 19/24

(54) **METHOD FOR PRODUCING AN EDIBLE SUBSTANCE FROM HALOPHYTIC PLANTS, USE OF AND SYSTEM FOR CORRESPONDING EDIBLE PRODUCTS**

(30) Priority: 20.02.2019 PT 2019115324
(71) Applicant: Novadelta - Comércio e Indústria de Cafés, Lda, 1950-041 Lisboa (PT)
(72) Inventor: NABEIRO, Rui Miguel, 7370-112 CAMPO MAIOR (PT); LOURA DA HORTA DOS PEIXINHOS, João, 3810-498 AVEIRO (PT)
(74) Representative: Ferreira Pinto, Francisca
(86) International application number: PCT/PT2020/050008
(87) International publication number: WO 2020/171726

(57) **Abstract**

The present invention discloses a process for production of a salted edible substance based upon halophyte plants, use and system of salted edible substances based upon halophyte plants, in particular in particular as food ingredient in general, including in preparing foodstuff.

## Description

### Field of the invention

The present invention refers to the field of edible substances of vegetal origin with salt properties, in general, and to edible substance with origin in halophyte plants, in particular.

### Background of the invention

The prior art includes several documents relating to the properties of halophyte plants in food, for example of the Salicornia plant, including as a substitute of salt in food, source of several nutrients.

The document US 20017021408 discloses a vegetal salt obtained from a halophyte plant whereby the plant is first harvested, the impurities are removed using seawater or salted water, is afterwards cut, extracted, compressed, dried and pulverized. In particular, it is referred the use of *Salicornia brachiata.* This process presents some constrains in terms of preservation of the original nutritional content of at least some species of halophyte plants. Moreover, a good execution of this process can result somewhat complex and expensive.

The document EP 1487283 B1 discloses a process for preparing salt of vegetal origin based upon, in particular the species *Suaeda nudiflora* and *Salicornia brachiata.* Said process includes the steps harvesting, washing and drying of the plant, the steps of separation so as to obtain a remaining biomass, mixture of the husk with the remaining biomass, followed by steps of transformation in coal with removal of the organic matter, and of incineration of the mixture of said husk and biomass.

The document EP 1684778 B1 discloses herbal extracts from Salicornia species and processes of preparation thereof, whereas the document WO 2005/ 115424 A1 discloses bioactive fractions obtained from the extracts of Salicornia. In particular, in both cases there is referred the use of the *Salicornia brachiata.*

The document EP 2144516 B1 discloses a salt derived from Salicornia and its production. In particular, the process includes the extraction of the plant in hot water and the centrifugation of the extract, whereby the supernatante is afterwards made pass through a filter membrane and is finally dried thereafter.

The document WO 2017/043914 A2 discloses a pharmacology composition comprising Salicornia as an active ingredient, and a functional food comprising said active ingredient. Also in this case, the substance derivate from the original plant is in the form of an extract, obtained by means of an extraction process in hot water or in ethanol.

The document "Avaliação do potencial da salicornia ramosíssima para saladas frescas ou em pó (sal verde), Julião M., Dissertação de Mestrado, Universidade do Algarve, evaluates the potential of use of the salicornia ramosíssima in food as substitute of marine salt, submitted to different treatments and stored at several temperatures. In particular, in this study there has been characterized the salicornia dry and ground for possible use as a spice. The reference to the drying and grinding process is merely indicative, whereby several possibilities and equipment are suggested, without details thereof.

The publication "Conheça os benefícios da planta descoberta em Santa Catarina que pode substituir o sal de cozinha", Gauzbach, online, 2015.07.25, refers the use of a vegetal species different from the present invention. Moreover, the publication describes the process of transformation of the Sarcocornia ambígua into a crystalized product.

The publication "Behavior of "green salt" from Salicornia Ramosissima and Sarcocornia perennis through storage", Antunes et al, Acta Horticulturae, n° 1194, pp. 777-784, 2018, refers several aspects associated with processing of the plant after harvest, including washing with sweet water and drying at 70 °C until constant weight, followed by grinding by sieve of 2 mm.

None of the documents in the prior art discloses a solution that provides an effective appropriation of organoleptic properties characteristic of halophyte plants, in particular of the Salicornia, and, therefore, by different types of substances.

### General description of the invention

The objective of the present invention is to provide a more efficient process of production of salted edible substances from halophyte plants, in particular of Salicornia.

This objective is attained according to the present invention by means of a process according to claim 1, whereby preferred embodiments are disclosed on the dependent claims.

In particular, the objective is attained by means of a process that includes providing a first quantity of halophyte plants, including the species *Salicornia ramosissima,* and carrying out a dehydration and grinding so as to obtain a salted edible substance of vegetal origin.

IN particular, said quantity of halophyte plants are not exposed to temperatures higher than 95 °C, preferentially higher than 60 °C, whereby it is particularly preferred when the dehydration is carried out in drying greenhouses only by natural heating and ventilation means.

It has proven as particularly advantageous when the process further includes a step of drainage at the ambient temperature, after washing said first quantity of halophyte plants, and before drying at temperature bigger than the ambient temperature.

In particular, the inclusion of the species *Salicornia ramosissima* proves itself as advantageous given the physical-chemical characteristics thereof, of the relatively reduced proportion of sodium relative to the total salinity content, and other nutrients present, with contribution to the use of the edible substance in food in general, and in the preparation of food as substitute for salt, in particular.

A related objective is to provide the use of a salted edible substance, different from marine salt, produced by means of a process according to the present invention.

This objective is attained according to the present invention by means of a use according to claim 10.

In particular, the salted edible substance comprises the species *Salicornia ramosissima* and is used as substitute of salt in food in general, including for preparing cold and hot food.

Another objective of the present invention is to provide a system of salted edible substances, in particular vegetal salt, presenting organoleptic proprieties characteristics of salt, but with more advantages in nutritional and functional terms.

This objective is solved according to the present invention by means of a system according to claim 12.

In particular, said system of salted edible substances includes the species *Salicornia ramosissima* and can include other edible substances.

### Description of the figures

The invention shall hereinafter be explained in greater detail based upon preferred embodiments and on the attached Figures.

The Figures show simplified schematic representations:
- Figure 1:: flow diagram of a first preferred embodiment of the process according to the present invention;
- Figure 2:: flow diagram of a second preferred embodiment of the process according to the present invention;
- Figure 3:: schematic diagram of drying disposition associated with a step of dehydration of edible substances, according to the present invention;
- Figure 4:: schematic diagram of preferred embodiments of system of edible substances, according to the present invention.

### Detailed description of preferred embodiments of the invention

The present invention discloses a process for obtaining a salted edible substance (A) from halophyte plants.

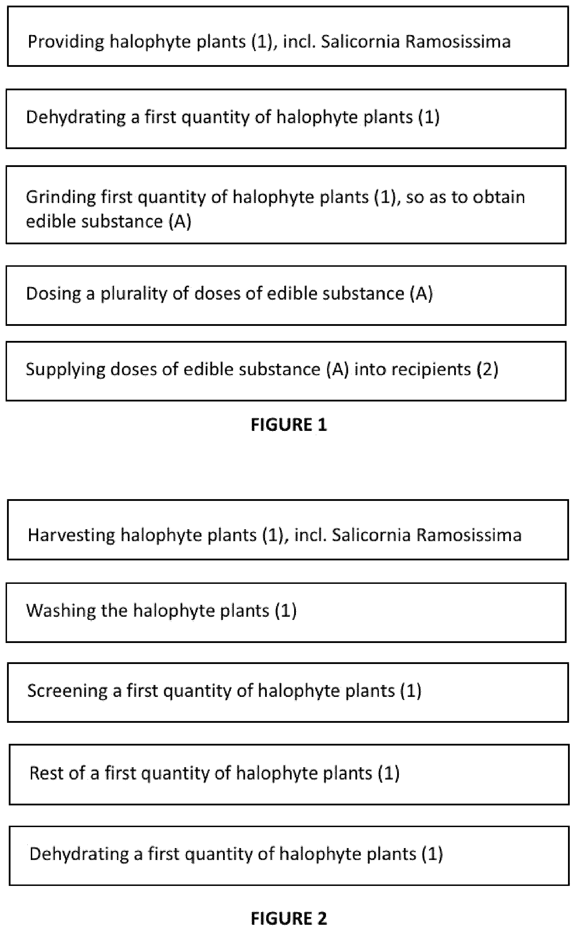

As schematically represented in **Figure 1****,** said process can include the harvest of halophyte plants of at least one species, for providing a first quantity of halophyte plants (1).

According to a first aspect, said first quantity of halophyte plants (1) includes at least *Salicornia ramosissima.*

The process can include a step of dehydration of said quantity of halophyte plants (1), and of grinding said first quantity of halophyte plants (1), thereby obtaining said edible substance (A).

Said step of dehydration can be carried out in natural drying greenhouses, or in drying devices with supply of final energy.

Said step of grinding can include the use of a device adapted for grinding of vegetal matter 1, and for obtaining with a characteristic dimension in the range between 0,1 and 10 mm, preferentially between 0,3 and 5 mm.

The process further includes the step of supplying dosed portions of said salted edible substance (A) to respective recipients (2).

The process according to the present invention does not include the submission of said first quantity of halophyte plants (1) to a temperature above 95 °C, preferentially above 60 °C. In particular, it is preferred when the dehydration is carried out by means of natural heating and ventilation.

Moreover, the process further does not include the interaction of said first quantity of halophyte plants (1) with other substance besides water, preferentially salted water.

In particular, the salted edible substance (A) including the species *Salicornia ramosissima* has proved as advantageous given the physical-chemical characteristics thereof, the relatively reduced proportion of sodium relative to the salinity content, and further presence of nutrients, with contribution to the use of the edible substance in food in general, and in the preparation of food as substitute of salt, in particular.

A system of salted edible substances (A, A') can include a plurality of substances that, as provided in a respective recipient (2), differ in at least one of the following parameters:
- fraction of *Salicornia ramosissima;*
- relative dehydration degree;
- relative dimension after grinding;
- combination with other edible substances in the recipient (2) .

According to the preferred embodiment represented in **Figure 2****,** the process of obtaining said first quantity of halophyte plants (1), includes harvesting of halophyte plants, including the species *Salicornia ramosíssima.*

In particular, said harvest is carried out from spaces of aquaculture of *Salicornia* ramosíssima in salted water, including natural spaces and built spaces.

After the harvest, there can be a step of washing the halophyte plants, using salted water for this purpose.

After the washing there can be a screening of the harvested matter so as to separate the halophyte plants from the remaining vegetal matters and eventual residues, as well as a first separation of part, so as to obtain said first quantity of halophyte plants (1).

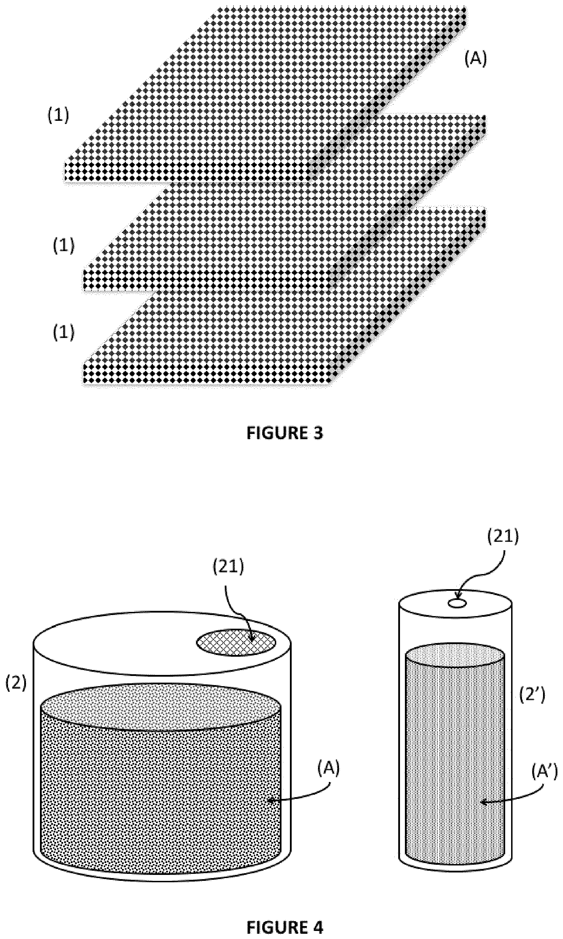

As schematically represented in **Figure 3****,** the step of dehydration of the first quantities of halophyte plants (1) can include a first step of rest at ambient temperature, or with the support of passive means, such as for example greenhouse. This first step is carried out immediately after washing of said first quantity of halophyte plants (1) and before of a second step of drying at a temperature higher than the ambient temperature.

The author verified that this first step of rest is important to ensure maintenance of the nutritional proprieties of the halophyte plants.

This first step of rest can be carried out with said first quantities of halophyte plants (1) provided in vertically disposed trays.

**Figure 4** schematically represents a system of said salted edible substances (A, A') provided in recipients (2, 2') adapted so that can be closed, at least partially sealed relative to humidity.

Said salted edible substances (A, A') present an average salt value of 15 to 40 g per 100 g, preferentially an average salt value of 20 to 30 g, and an average sodium value smaller than 20 g per 100 g, preferentially an average sodium value smaller than 15 g per 100 g,

It is preferred when said salted edible substances (A, A') differ in at least one of material shape, including of granulated type, of powder type, and colour.

It is preferred when said recipients (2, 2') present a lid-like element adapted for closing the interior of the recipient (2, 2') in sealed manner relative to humidity, a dosing disposition associated with the opening of the recipient (2, 2') presenting at least one opening (21), or a grid of openings with a previously defined disposition, in a colourless transparent envelope.

In particular, said recipients (2, 2') present an opening (21) adapted to the average dimension of particle of respective salted edible substances (A, A'). Moreover, said recipients (2, 2') can present a single opening, or a grid of openings, for example of average dimension relatively smaller than in the case of a single opening.

Said salted edible substances (A, A') comprise the species *Salicornia ramosissima* and can be used as substitute of salt in food in general, including in the preparation of cold and hot food.

## Claims

1. Process for preparing a salted edible substance (A) from halophyte plants, said process including the following steps:
- harvesting halophyte plants from at least one species;
- providing a first quantity of halophyte plants (1);
- dehydrating said first quantity of halophyte plants (1);
- grinding said first quantity of halophyte plants (1) so as to obtain said edible substance (A);
- supplying portions of said salted edible substance (A), obtained from halophyte plants in respective recipients (2),
and not including the submission of said first quantity of halophyte plants (1) to a plant temperature above 60 °C.

2. Process according to claim 1, **characterized in that** further includes the following steps:
- washing and screening of the harvested matter for obtaining said first quantity of halophyte plants (1) before of said dehydration;
and does not include any of the following steps:
- submission of said first quantity of halophyte plants (1) to a plant temperature above 55 °C, preferentially above 50 °C;
- interaction of said first quantity of halophyte plants (1) with another substance besides of water, preferentially salted water.

3. Process according to claims 1 or 2, **characterized in that** said first quantity of halophyte plants (1) should include at least one of the following species of halophyte plants:
- *Salicornia ramosissima;*
- *Salicornia brachiata;*
- *Suaeda nudiflora;*
- *Salicornia spp.;*
- *Sacocornia spp.*
whereby it is preferred when includes at least *Salicornia ramosissima.*

4. Process according to claims 1 or 2, **characterized in that** said first quantity of halophyte plants (1) includes *Salicornia ramosissima* in a mass fraction bigger than 25%, preferentially bigger than 70%, particularly preferentially bigger than 90% in mass fraction.

5. Process according to any one of the claims 1 to 4, **characterized in that** said dehydration includes a first step of rest at the ambient temperature by passive means, including at a location of greenhouse type, or similar, preferentially with disposition of said first quantity spread over surface, upon a support adapted for drainage of water, for example of the network type or similar, said first step of rest being previous to said dehydration by means of drying and having a duration shorter than ten days, preferentially shorter than five days, particularly preferentially shorter than two days.

6. Process according to any one of claims 1 to 4, **characterized in that** said dehydration is provided by means of dehydration temperature bigger than the ambient temperature, provided by active energy consuming means, including of greenhouse type, with electric heating or other, for example of the type infrared or microwave heating, according to at least one of:
- dehydration temperature value smaller than 95 °C, preferentially smaller than 70 °C, and bigger than 30 °C, preferentially bigger than 40 °C,
- variable dehydration temperature value, along at least one dehydration cycle,
- several successive dehydration cycles with dehydration temperatures varying between the ambient temperature and the dehydration temperature.

7. Process according to any one of claims 1 to 6, **characterized in that** said grinding is carried out by means of a mechanism that provides grinding dimensions, in the range between 0,1 and 10 mm, preferentially between 0,3 and 5 mm, particularly preferentially between 0,5 and 2,5 mm.

8. Process according to any one of claims 2 to 7, **characterized in that** said washing of harvested matter for obtaining said first quantity of halophyte plants (1), is carried out with salted water, including seawater or other.

9. Process according to any one of claims 2 to 8, **characterized in that** said screening of harvested matter for obtaining said first quantity of halophyte plants (1), is carried out after said washing, preferentially at least 36 hours after said washing, by means of a mechanism of manual or mechanical actuation.

10. Use of a salted edible substance (A) produced by means of a process that comprises dehydration and grinding of a first quantity of halophyte plants (1), according to any one of previous claims 1 to 9.

11. Use according to claim 10, **characterized in that** said salted edible substance (A) is used in food in general, including for the preparation of cold and hot food.

12. System of edible products including at least one salted edible substance (A), preferentially a plurality of salted edible substances (A, A') resulting from processing of Salicornia, in particular obtained by means of a process according to any one of claims 1 to 9, **characterized in that** said salted edible substances (A, A') present an average salt value of 15 to 40 g per 100 g, preferentially an average salt value of 20 to 30 g, and an average value of sodium smaller than 20 g per 100 g, preferentially an average value of sodium smaller 15 g per 100 g, and differ preferentially in at least one of material shape, including of grain type, of powder type, and of colour.

13. System according to claims 12, **characterized in that** said salted edible substances (A, A') present the following ranges of average values for each 100 g:
- energy: 135 - 150 kcal;
- humidity: 12 - 16 %;
- proteins: 6,5 - 7,5 g;
- carbon hydrates: 7 - 9 g;
- total sugars: 7 - 9 g;
- fat: 1,5 - 2,5 g;
- saturated fat acids: 0,3 - 1 g;
- monounsaturated fat acids: 0,1 - 0,5 g
- polyunsaturated fat acids: 0,5 - 1,5 g
- food fibres: 30 - 40 g;

14. System according to claims 12 or 13, **characterized in that** said salted edible substances (A, A') present the following average values for each 100 g:
- calcium: 350 - 450 mg;
- magnesium: 700 - 1000 mg;
- potassium: 1200 - 1500 mg;
- iodine: < 0,02 mg;
- vitamin A: < 0,09 mg;
- vitamin C: < 0,9 mg
- vitamin D: < 10 µg.

15. System according to claims 12 to 14, **characterized in that** said salted edible substances (A, A') include the species *salicornia ramosissima,* and **in that** said salted edible substances (A, A') differ between each other in at least one of:
- fraction of *salicornia ramosissima,*
- relative dehydration degree,
- characteristic dimensions,
- other edible substances mixed in respective recipients (2, 2').

16. System according to claims 12 or 15, **characterized in that** said salted edible substances (A, A') are provided in recipients (2, 2') adapted so that can be closed in at least partially sealed manner, and that present at least one of:
- a lid-like element adapted for closure of the interior of the recipient (2, 2') in sealed manner relative to humidity;
- a dosing disposition associated with the opening of the recipient (2, 2') presenting at least one opening (21), or a grid of openings with a previously defined dimension;
- a non-transparent and uncoloured envelope.
